# EUROPEAN PATENT SPECIFICATION

(11) **EP 2 656 757 B1**
(45) Date of publication and mention of the grant of the patent: **25.02.2015**
(21) Application number: 12189366.3
(22) Date of filing: 22.10.2012
(51) Int. Cl.: A47J 36/02, A47J 27/022

(54) **Conduction plate of induction heating cooking vessel**
Leitungsplatte eines Induktionserhitzungs-Kochgefäßes
Plaque de conduction de récipient de cuisson à chauffage par induction

(30) Priority: 23.04.2012 KR 20120042314
(43) Date of publication of application: 30.10.2013
(73) Proprietor: Seowon Pallas Inc., Gyeonggi-do 415-871 (KR)
(72) Inventor: Seo, Ki Won, 150-918 Seoul (KR)
(74) Representative: Gille Hrabal

(56) References cited:
- WO-A2-2011/152612
- JP-A- H1 167 438
- KR-A- 20050 113 543

## Description

### CROSS REFERENCE TO RELATED APPLICATION

This application claims the benefit of Korean Patent Application No. 10-2012-0042314, filed on 23, April, 2012, entitled "Conduction Plate of Induction Heating Cooking Vessel".

### BACKGROUND OF THE INVENTION

### 1. Technical Field

The present invention relates to a conduction plate of an induction heating cooking vessel, and more particularly, to a conduction plate of an induction heating cooking vessel capable of rapidly heating a cooking vessel through induction heating.

### 2. Description of the Related Art

Generally, an induction heating method, which is a method of performing the heating by converting electrical energy into thermal energy by electromagnetic induction, has been utilized in various fields.

Particularly, the induction heating has also been applied to a cooking vessel used to cook food. Since this induction heating cooking vessel has excellent functionality and usability, the demand thereof has increased.

Therefore, research into a conduction plate of the induction heating cooking vessel has been actively conducted.

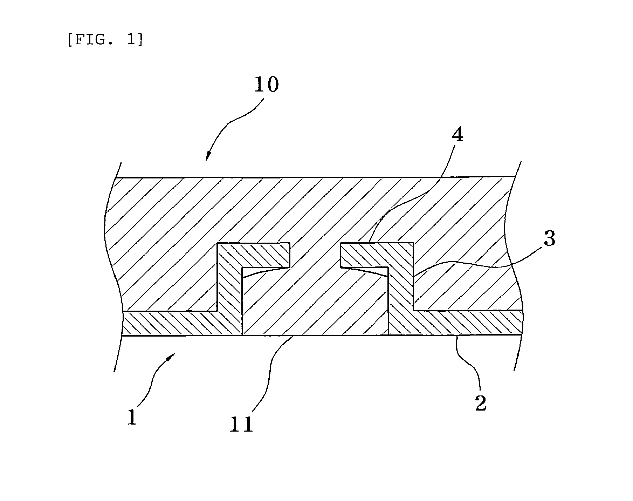

The conduction plate of an induction heating cooking vessel according to the related art, such as disclosed in WO-A-2011/152612, is configured to include a body part 2 contacting a lower surface of a vessel body 10; a vertical part 3 extended from the body part 2 in a vertical direction; and a horizontal part 4 extended from the vertical part 3 in a horizontal direction, as shown in FIG. 1.

Since the conduction plate 1 as described above has a structure in which it is upwardly bent once, in the case in which the vertical part 3 is formed to have a long length, coupling force with the vessel body 10 may be increased; however, a coupled part 11 of the vessel body 10 that is plastically deformed is not completely closely adhered to bent parts of the vertical part 3 and the horizontal part 4, such that the conduction plate 1 is deformed. Further, in the case in which the vertical part 3 is formed to have a short length, the coupled part 11 of the vessel body 10 that is plastically deformed is completely closely adhered to the bent parts of the vertical part 3 and the horizontal part 4; however, the coupling force with the vessel body 10 may be decreased. Further, stress is concentrated on one of the bent parts of the vertical part 3 and the horizontal part 4, such that there is a limitation in firmly maintaining a coupled state of the conduction part 1.

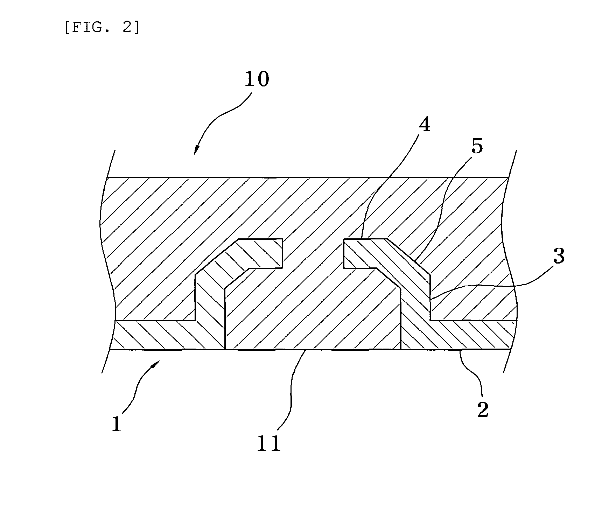

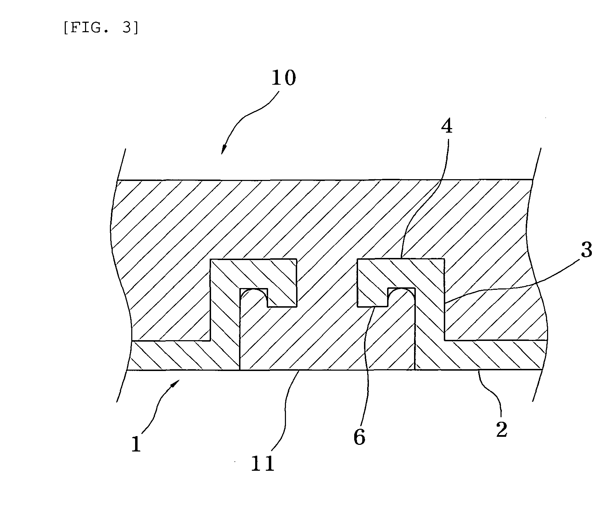

FIGS. 2 and 3 show a conduction plate of an induction heating cooking vessel according to another embodiment of the related art.

In the conduction plate 1 shown in FIG. 2, an inclined part 5 is formed between a vertical part 3 extended from a body part 2 and a horizontal part 4, such that it is advantageous to completely closely adhere a coupled part 11 of a vessel body 10 that is plastically deformed to the conduction plate 1; however, a contact area of the conduction plate 1 is deceased, such that heat conduction efficiency is decreased and a flow of stress is generated along the inclined part 5, thereby concentrating the stress on bent parts of the horizontal part 4 and the inclined part 5.

Further, in the conduction plate 1 shown in FIG. 3, a protrusion part 6 is formed at an end portion of a horizontal part 4 extended from a vertical part 3 connected to a body part 2, such that coupling force of the conduction plate 1 may be increased; however, a coupled part 11 of a vessel body 10 that is plastically deformed is not completely closely adhered to bent parts of the horizontal part 4 and the protrusion part 6, such that the conduction plate 1 is deformed. In addition, most stress is concentrated on the bent parts of the vertical part 3 and the horizontal part 4.

### SUMMARY OF THE INVENTION

An object of the present invention is to provide a conduction plate of an induction heating cooking vessel capable of increasing a contact area with a vessel body and improving close adhesion force and coupling force with the vessel body.

According to an exemplary embodiment of the present invention, there is provided a conduction plate of an induction heating cooking vessel, the conduction plate including: a body part contacting a lower surface of a vessel body and having coupling holes formed therein; a first vertical part vertically extended upwardly from the coupling hole toward the vessel body; a first horizontal part horizontally extended inwardly from an end portion of the first vertical part; a second vertical part vertically extended upwardly from an end portion of the first horizontal part; and a second horizontal part horizontally extended inwardly from an end portion of the second vertical part.

### BRIEF DESCRIPTION OF THE DRAWINGS

FIGS. 1 to 3 are partial cross-sectional view showing a coupled state of a conduction plate of an induction heating cooking vessel according to the related art;
FIG. 4 is a perspective view showing a coupled state of a conduction plate of an induction heating cooking vessel according to an exemplary embodiment of the present invention;
FIG. 5 is a plan view showing the conduction plate of an induction heating cooking vessel according to the exemplary embodiment of the present invention;
FIG. 6 is a partial cross-sectional view showing a structure of the conduction plate of an induction heating cooking vessel according to the exemplary embodiment of the present invention; and
FIG. 7 is a partial cross-sectional view showing the coupled state of the conduction plate of an induction heating cooking vessel according to the exemplary embodiment of the present invention.

### DESCRIPTION OF THE PREFERRED EMBODIMENTS

Hereinafter, a conduction plate of an induction heating cooking vessel according to an exemplary embodiment of the present invention will be described in more detail with reference to the accompanying drawings.

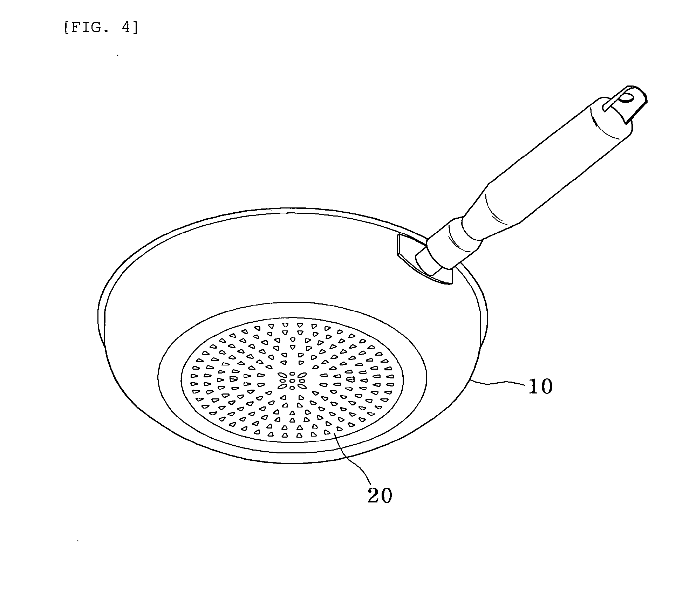

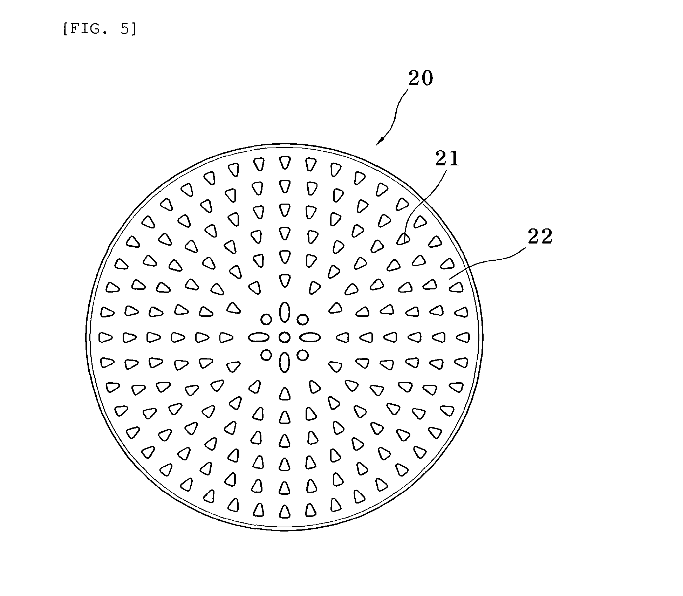

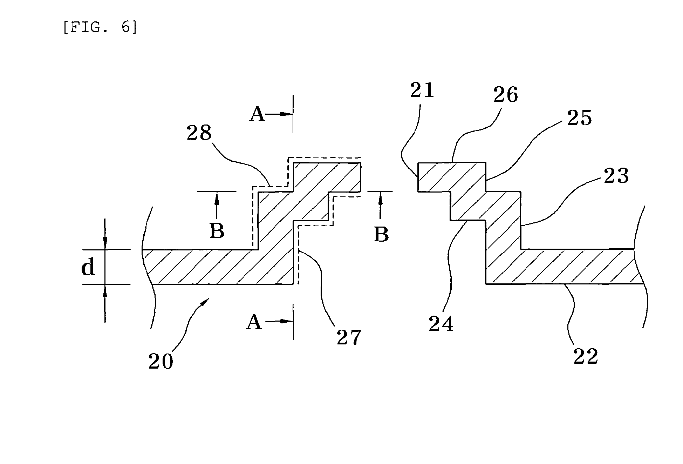

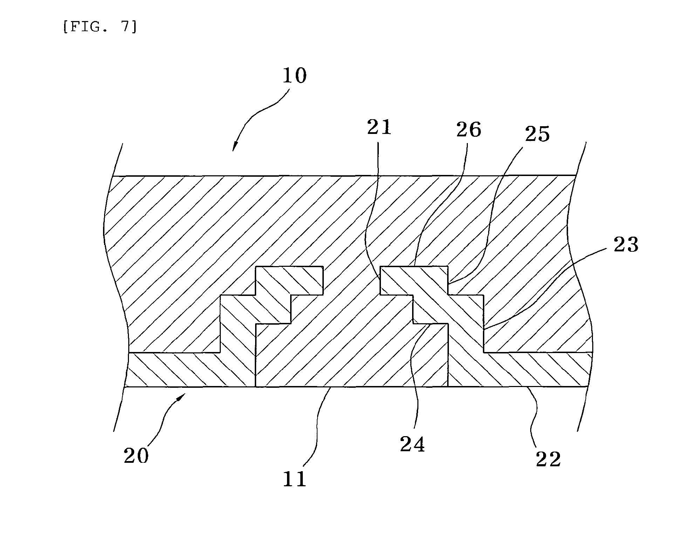

The present invention relates to a conduction plate of an induction heating cooking vessel. FIG. 4 is a perspective view showing a coupled state of a conduction plate of an induction heating cooking vessel according to an exemplary embodiment of the present invention; FIG. 5 is a plan view showing the conduction plate of an induction heating cooking vessel according to the exemplary embodiment of the present invention; FIG. 6 is a partial cross-sectional view showing a structure of the conduction plate of an induction heating cooking vessel according to the exemplary embodiment of the present invention; and FIG. 7 is a partial cross-sectional view showing the coupled state of the conduction plate of an induction heating cooking vessel according to the exemplary embodiment of the present invention.

The conduction plate 20 of an induction heating cooking vessel according to the exemplary embodiment of the present invention is coupled to a lower portion of a vessel body 10 to serve to heat the vessel body 10 and has a structure in which it is bent toward the vessel body 10 twice.

The conduction plate 20 is configured to include a body part 22 contacting a lower surface of the vessel body 10; a first vertical part 23 extended from the body part 22; a first horizontal part 24 extended from the first vertical part 23; a second vertical part 25 extended from the first horizontal part 24; and a second horizontal part 26 extended from the second vertical part 25.

The body part 22 is made of a conductive material having a plate shape and is provided with a plurality of coupling holes 21.

Each of the coupling holes 21 has an isosceles triangular shape and is formed so that a vertex between two equal sides is disposed toward the center of the body part 22 and the other side is disposed at an outer side. Due to characteristics of the shape and the disposition structure of the coupling holes 21 as described above, coupling forces of concentric circles passing through the vertex between two equal sides and concentric circles passing through the other side may be appropriately distributed.

Meanwhile, in a plurality of concentric circles sharing the center with each other in the conductive plate 20, since an outer concentric circle has a circumference larger than that of an inner concentric circle, the outer concentric circle requires coupling force larger than that of the inner concentric circle.

In addition, the coupling holes 21 are arranged at the same interval in a circumferential direction in a concentric circle form from the center of the body part 22. Therefore, the coupling force of the body part 22 may be uniformly distributed and an area occupied by the coupling holes 21 in the body part 22 may be relatively decreased, thereby improving a heating effect.

Further, an interval between the coupling holes 21 arranged in a diameter direction and a distance between the coupling holes 21 arranged in the circumferential direction are substantially the same as each other, such that the coupling force is uniformly distributed in a radial direction as well as the circumferential direction.

Positions of the coupling holes 21 formed in the body part 22 may be appropriately selected in consideration of a thickness change of the conduction plate 20 generated when being processed by a press, or the like, dispersion of the coupling force between the conduction plate 20 and the vessel body 10, and efficient heat transfer between the conduction plate 20 and the vessel body 10.

The first vertical part 23 is vertically extended upwardly from the coupling hole 21 of the body part 22 toward the vessel body 10, the first horizontal part 24 is horizontally extended inwardly from an end portion of the first vertical part 23, the second vertical part 25 is vertically extended upwardly from an end portion of the first horizontal part 24, and the second horizontal part 26 is horizontally extended inwardly from an end portion of the second vertical part 25.

In the conduction plate 20 having the structure in which it is bent twice as described above, a plastic working amount of coupled part 11 protruding integrally with the vessel body 10 at a lower surface of the vessel body 10 and coupled to the conduction plate 20 is decreased, thereby making it possible to improve workability, and the coupled part 11 of the vessel body 10 that is plastically worked and the conduction plate 20 are completely closely adhered to each other to maximize an effective contact area, thereby making it possible to relatively improve heat transfer efficiency.

In addition, the coupling force with the vessel body 10 is dispersed in a uniform level at two bent parts, thereby making it possible to decrease a stress concentration amount.

Meanwhile, describing a specific shape of the conduction plate 20, a length of a segment connecting one of all points in regions of outer contact surfaces 27 of the first vertical part 23, the first horizontal part 24, the second vertical part 25, and the second horizontal part 26 and one of all points in regions of inner contact surfaces 28 of the first vertical part 23, the first horizontal part 24, the second vertical part 25, and the second horizontal part 26 to each other is the same as or larger than a thickness d of the body part 22. This is to improve durability and strength of the conduction plate 20.

In addition, it is preferable that the outer contact surface 27 of the first vertical part 23 and the inner contact surface 28 of the second vertical part 25 are positioned on the same line (A-A) or are positioned to be close to the same line. The reason is that in the case in which the inner contact surface 28 of the second vertical part 25 is positioned to be closer to the coupling hole 21 as compared with the outer contact surface 27 of the first vertical part 23, a thickness of the second vertical part 25 becomes thin, such that the second vertical part 25 becomes weak, or a space between the second vertical part 25 and the coupled part of the vessel body becomes small when the outer contact surface 27 of the second vertical part 25 is positioned to be close to the coupling hole 21 in order to constantly maintain the thickness, such that it is difficult to plastically deform the coupled part; to the contrary, in the case in which the inner contact surface 28 of the second vertical part 25 is positioned to be more distant from the coupling hole 21 as compared with the outer contact surface 27 of the first vertical part 23, it is difficult to form the first horizontal part 24.

In addition, it is advantageous in maintaining a uniform thickness that the inner contact surface 28 of the first horizontal part 24 and the outer contact surface 27 of the second horizontal part 26 are positioned on the same line (B-B). The reason is that in the case in which the outer contact surface 27 of the second horizontal part 26 is positioned to be deeper as compared with the inner contact surface 28 of the first horizontal part 24, a length of the second vertical part 25 increases, such that additional plastic deformation should be applied to the coupled part of the vessel body; to the contrary, in the case in which the outer contact surface 27 of the second horizontal part 26 is positioned to be shallower as compared with the inner contact surface 28 of the first horizontal part 24, it is difficult to form the second vertical part 25.

A manufacturing process of the conduction plate of an induction heating cooking vessel described above will be briefly described below.
① First Step: A circular conduction plate is injected into a press and then pressed to form the body part 22, the first vertical part 23, and a horizontal part. Here, the horizontal part is to form the first horizontal part 24, the second vertical part 25, and the second horizontal part 26.
② Second Step: The conduction plate subjected to the first step is injected into a press of the next process and then pressed to form the second vertical part 25 and the second horizontal part 26. The first vertical part 23, the first horizontal part 24, the second vertical part 25, and the second horizontal part 26 are formed at the conduction plate 20 subjected to these two steps.
③ Third Step: a central region of the second horizontal part 26 is punched to form the coupling hole 21 having a predetermined size.

Meanwhile, in the manufacturing process of the conduction plate as described above, the third step may be performed before the first step or the first and second steps may be simultaneously performed in a single press. However, it is preferable in view of maintaining a uniform thickness of the conduction plate 20 that the third step is performed after the first and second steps.

With the conduction plate of an induction heating cooling vessel according to the exemplary embodiment of the present invention, the coupled part has a structure in which it is bent twice, such that a contact area with the vessel body is increased, thereby making it possible to improve heat conduction efficiency. In addition, coupling force with the vessel body is increased, thereby making it possible to more firmly and stably maintain a coupled state of the conduction plate.

In addition, the stress applied to the conduction plate is distributed at two bent parts, thereby making it possible to secure durability of the conduction plate.

Further, the coupled part of the vessel body is completely closely adhered to the conduction plate, such that a space therebetween is not generated, thereby making it possible to efficiently prevent deformation of the conduction plate generated from the space.

## Claims

1. An induction heating cooking vessel with a conduction plate coupled to a lower portion of a vessel body (10), the conduction plate comprising:
a body part (22) contacting a lower surface of the vessel body (10) and having coupling holes (21) formed therein;
a first vertical part (23) vertically extended upwardly from the coupling hole (21) toward the vessel body (10);
a first horizontal part (24) horizontally extended inwardly from an end portion of the first vertical part (23); **characterised in that** the conduction plate comprises
a second vertical part (25) vertically extended upwardly from an end portion of the first horizontal part (24); and
a second horizontal part (26) horizontally extended inwardly from an end portion of the second vertical part (25).

2. The conduction plate of claim 1, wherein a length of a segment connecting one of all points in regions of outer contact surfaces (27) of the first vertical part (23), the first horizontal part (24), the second vertical part (25), and the second horizontal part (26) and one of all points in regions of inner contact surfaces (28) of the first vertical part (23), the first horizontal part (24), the second vertical part (25), and the second horizontal part (26) to each other is the same as or larger than a thickness d of the body part (22).

3. The induction heating cooking vessel of claim 1, wherein the outer contact surface (27) of the first vertical part (23) and the inner contact surface (28) of the second vertical part (25) are positioned on the same line (A-A).

4. The induction heating cooking vessel of claim 1, wherein the inner contact surface (28) of the first horizontal part (24) and the outer contact surface (27) of the second horizontal part (26) are positioned on the same line (B-B).

5. The induction heating cooking vessel of claim 1, wherein each of the coupling holes (21) has an isosceles triangular shape and is formed so that a vertex between two equal sides is disposed toward the center of the body part (22).

6. The induction heating cooking vessel of claim 1 or 5, wherein a plurality of coupling holes (21) are arranged at the same interval in a circumferential direction in a concentric circle form in which they share the center of the body part (22) with each other.

## Patentansprüche

1. Induktionserhitzungs-Kochgeschirr mit einer Leitungsplatte, die mit einem unteren Bereich eines Kochbehälterkörpers (10) verbunden ist, wobei die Leitungsplatte aufweist:
einen Körperbereich (22), der in Kontakt mit einer Unterfläche des Kochbehälterkörpers (10) steht und der darin ausgebildete Verbindungslöcher (21) aufweist;
einen ersten vertikalen Abschnitt (23), der sich von dem Verbindungsloch (21) vertikal nach oben zu dem Kochbehälterkörper (10) hin erstreckt;
einen ersten horizontalen Abschnitt (24), der sich von einem Endbereich des ersten vertikalen Abschnitts (23) horizontal nach innen erstreckt;
**dadurch gekennzeichnet, dass** die Leitungsplatte aufweist:
einen zweiten vertikalen Abschnitt (25), der sich von einem Endbereich des ersten horizontalen Abschnitts (24) vertikal nach oben erstreckt; und
einen zweiten horizontalen Abschnitt (26), der sich von einem Endbereich des zweiten vertikalen Abschnitts (25) horizontal nach innen erstreckt.

2. Leitungsplatte gemäß Anspruch 1, wobei eine Länge eines Segments, das einen aller Punkte in Bereichen der äußeren Kontaktflächen (27) des ersten vertikalen Abschnitts (23), des ersten horizontalen Abschnitts (24), des zweiten vertikalen Abschnitts (25) und des zweiten horizontalen Abschnitts (26) und einen aller Punkte in Bereichen der inneren Kontaktaktflächen (28) des ersten vertikalen Abschnitts (23), des ersten horizontalen Abschnitts (24), des zweiten vertikalen Abschnitts (25) und des zweiten horizontalen Abschnitts (26) miteinander verbindet, gleich oder größer einer Dicke d des Körperbereiches (22) ist.

3. Induktionserhitzungs-Kochgeschirr gemäß Anspruch 1, wobei die äußere Kontaktfläche (27) des ersten vertikalen Abschnitts (23) und die innere Kontaktfläche (28) des zweiten vertikalen Abschnitts (25) auf der gleichen Linie (A-A) positioniert sind.

4. Induktionserhitzungs-Kochgeschirr gemäß Anspruch 1, wobei die innere Kontaktfläche (28) des ersten horizontalen Abschnitts (24) und die äußere Kontaktfläche (27) des zweiten horizontalen Abschnitts (26) auf der gleichen Linie (B-B) positioniert sind.

5. Induktionserhitzungs-Kochgeschirr gemäß Anspruch 1, wobei jedes der Verbindungslöcher (21) die Form eines gleichschenkligen Dreiecks aufweist und derart ausgebildet ist, dass ein Scheitel zwischen zwei gleichen Seiten zu dem Mittelpunkt des Körperbereichs (22) hin angeordnet ist.

6. Induktionserhitzungs-Kochgeschirr gemäß Anspruch 1 oder 5, wobei eine Vielzahl von Verbindungslöchern (21) in dem gleichen Abstand in einer Umfangsrichtung in einer konzentrischen Kreisform angeordnet sind, in welcher sie den Mittelpunkt des Körperbereichs (22) miteinander teilen.

## Revendications

1. Récipient de cuisson à chauffage par induction comprenant une plaque de conduction couplée à une partie inférieure d'un corps de récipient (10), la plaque de conduction comprenant :
une partie de corps (22) en contact avec une surface inférieure du corps de récipient (10) et ayant des trous de couplage (21) formés dans celle-ci ;
une première partie verticale (23) qui s'étend verticalement vers le haut à partir du trou de couplage (21) vers le corps de récipient (10) ;
une première partie horizontale (24) qui s'étend horizontalement vers l'intérieur à partir d'une partie d'extrémité de la première partie verticale (23) ;
**caractérisé en ce que** la plaque de conduction comprend :
une seconde partie verticale (25) qui s'étend verticalement vers le haut à partir d'une partie d'extrémité de la première partie horizontale (24) ; et
une seconde partie horizontale (26) qui s'étend horizontalement vers l'intérieur à partir d'une partie d'extrémité de la seconde partie verticale (25).

2. Plaque de conduction selon la revendication 1, dans laquelle une longueur d'un segment qui relie un de tous les points au niveau des surfaces de contact extérieures (27) de la première partie verticale (23), de la première partie horizontale (24), de la seconde partie verticale (25) et de la seconde partie horizontale (26) à un de tous les points au niveau des surfaces de contact intérieures (28) de la première partie verticale (23), de la première partie horizontale (24), de la seconde partie verticale (25) et de la seconde partie horizontale (26) est égale à ou plus grande qu'une épaisseur d de la partie de corps (22).

3. Récipient de cuisson à chauffage par induction selon la revendication 1, dans lequel la surface de contact extérieure (27) de la première partie verticale (23) et la surface de contact intérieure (28) de la seconde partie verticale (25) sont positionnées sur la même ligne (A-A).

4. Récipient de cuisson à chauffage par induction selon la revendication 1, dans lequel la surface de contact intérieure (28) de la première partie horizontale (24) et la surface de contact extérieure (27) de la seconde partie horizontale (26) sont positionnées sur la même ligne (B-B).

5. Récipient de cuisson à chauffage par induction selon la revendication 1, dans lequel chacun des trous de couplage (21) a une forme de triangle isocèle et est formé de sorte qu'un vertex entre deux côtés égaux est disposé vers le centre de la partie de corps (22).

6. Récipient de cuisson à chauffage par induction selon la revendication 1, dans lequel une pluralité de trous de couplage (21) est arrangée aux mêmes distances dans une direction circonférentielle sous la forme d'un cercle concentrique, dans lequel ils partagent le centre de la partie de corps (22).
